# DEMANDE DE BREVET EUROPEEN

(11) **EP 0 782 330 A1**
(43) Date de publication de la demande: **02.07.1997**
(21) Numéro de dépôt: 96402892.2
(22) Date de dépôt: 26.12.1996
(51) Int. Cl.: H04N 5/14

(54) **Dispositif d'estimation de mouvement par appariement de blocs**

(30) Priorité: 29.12.1995 FR 9515747
(71) Demandeur: THOMSON multimedia, 92050 Paris La Défense (FR)
(72) Inventeur: Albin, François, 92050 Paris la Defense Cedex (FR); Knee, Michael, 92050 Paris la Defense Cedex (FR)
(74) Mandataire: Ruellan-Lemonnier, Brigitte

(57) **Abrégé**

Le dispositif d'estimation de mouvement d'une image vidéo par appariement de blocs comprenant un circuit de traitement par vecteur mouvement candidat pour calculer les erreurs entre les pixels mis en correspondance par ce vecteur pour chaque bloc de l'image est caractérisé en ce que les circuits de traitement (8i) cumulent les erreurs au niveau de chaque ligne d'un bloc pour fournir des sommes partielles, en ce que les circuits de traitement (8i) relatifs aux vecteurs mouvements candidats de même composante sont couplés entre eux pour former une chaîne, elle même rebouclée par l'intermédiaire d'une mémoire (9) pour transférer les sommes partielles des erreurs calculées à la ligne vidéo courante pour le bloc précédent et correspondant à chacun de ces vecteurs candidats vers cette mémoire et les sommes partielles calculées à la ligne vidéo précédente et relatives au bloc suivant, de cette mémoire vers les entrées des circuits de traitement correspondants, ces transferts étant réalisés pendant le calcul de la somme partielle du bloc courant.

Les applications concernent la compression d'image.

## Description

L'invention concerne un dispositif d'estimation de mouvement basé sur la technique d'appariement par bloc plus connue sous l'appellation Anglo-saxonne de "block matching".

Cette technique est bien connue dans le domaine de l'estimation de mouvement pour images de télévision. Elle consiste à rechercher, à partir d'un bloc d'image courant constitué d'un ensemble de pixels, un bloc dans l'image précédente qui lui correspond le mieux selon certains critères. Ces critères sont, par exemple, l'erreur absolue ou l'erreur quadratique moyenne entre les valeurs de luminance des pixels mis en superposition, erreur sommée sur l'ensemble des pixels du bloc.

Cette recherche se fait dans une fenêtre de recherche de l'image précédente définie autour de la position du bloc courant.

La position relative des deux blocs donne le déplacement, c'est à dire la valeur du vecteur mouvement.

Cette technique basée sur la seule image précédente est connue sous le terme Anglo-saxon de "one sided block-matching". Elle peut être étendue, lors d'interpolation d'images, à la recherche de blocs corrélés à ceux, virtuels, de cette image interpolée, en effectuant cette recherche sur l'image précédente et l'image suivante. Elle est alors connue sous le terme de "two-sided block matching", pour être par exemple décrite dans la demande de brevet européen N° 93 402 187.4 déposée le 8 septembre 1993 au nom de Thomson Consumer Electronics SA.

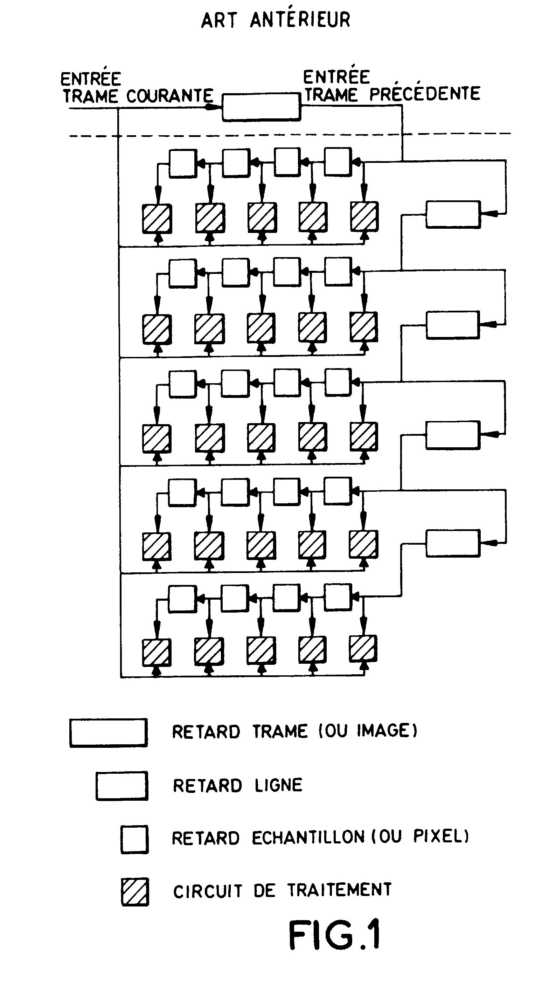

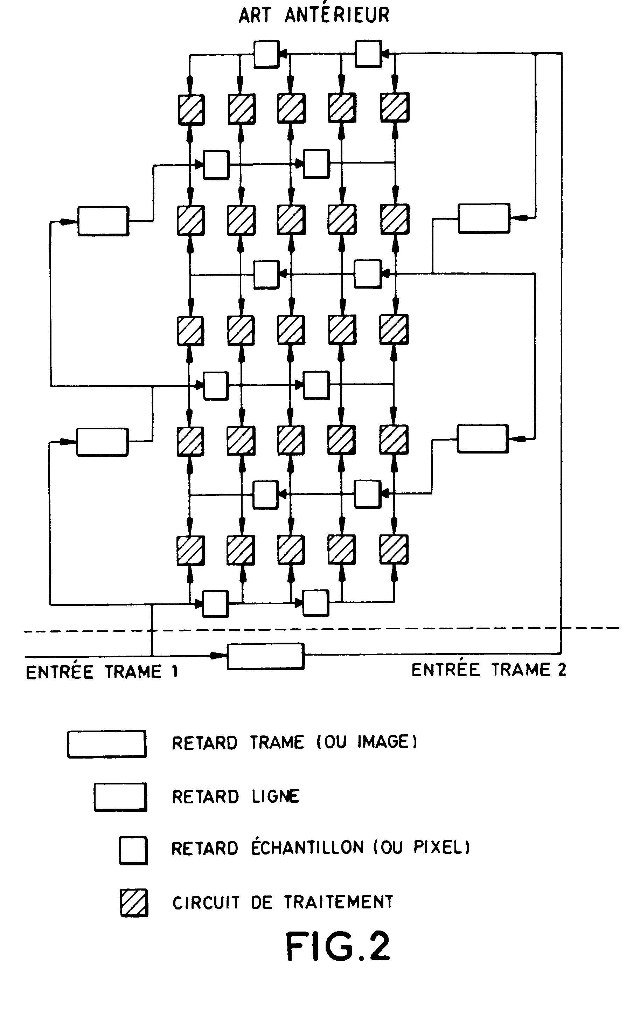

Deux exemples d'architecture d'estimateur de mouvement connus de l'art antérieur et décrits dans la demande susmentionnée sont représentés aux figures 1 et 2. Les recherches se font, dans ces exemples, dans des fenêtres de ± 2 pixels en horizontal et en vertical autour du bloc courant.

La figure 1 correspond au "one-sided block-matching". Les circuits de traitement, en grisé sur les figures, reçoivent en parallèle sur une entrée, l'information concernant le pixel courant (la luminance). Sur la deuxième entrée de chaque circuit de traitement est présenté le même type d'information mais provenant de l'image précédante du fait du circuit de retard image (ou trame). Les circuits à retard ligne et pixel (ou échantillon) que doit traverser l'information luminance avant d'arriver sur la deuxième entrée du circuit de traitement définissent le bloc mis en correspondance avec le bloc courant et donc le vecteur mouvement associé au circuit de traitement. Ce bloc correspond au bloc courant décalé des retards successifs en horizontal (retard élémentaire) et en vertical (retard ligne) que traverse l'information luminance avant d'atteindre le circuit considéré. Chaque circuit de traitement est relatif à un décalage particulier donc à un vecteur mouvement candidat. La fenêtre de recherche qui est de ± 2 pixels en horizontal et en vertical autour du bloc courant correspond à 25 vecteurs mouvement candidats.

Chaque circuit de traitement accumule les erreurs entre les valeurs de luminance pour chacun des pixels du bloc courant arrivant sur son entrée de manière à donner l'erreur globale entre le bloc courant et le bloc de l'image précédante correspondant au circuit. Pour ce bloc courant, l'erreur accumulée minimale élit le circuit, donc le bloc de l'image précédente, donc le vecteur mouvement. Ceci est réalisé pour chacun des blocs de l'image.

L'erreur calculée peut être l'erreur absolue ou l'erreur quadratique moyenne.

La figure 2 correspond au "two-sided block-matching". Ici les circuits de traitement accumulent les erreurs entre le bloc de l'image suivante et le bloc de l'image précédente pour déterminer le vecteur mouvement à affecter au bloc courant de l'image interpolée selon le principe explicité dans le demande de brevet précédemment mentionnée.

De telles architectures, qui exploitent les informations vidéo selon le balayage télévision, nécessitent des circuits de mémorisation de mise en oeuvre complexe; cette mémorisation de résultats intermédiaires due à ce type de balayage et permettant le calcul des erreurs pour chaque bloc, doit être effectuée au niveau de chaque circuit de traitement et, pour un circuit de traitement donné, au niveau de chaque bloc et même au niveau de chaque ligne de chaque bloc. Une solution consistant à balayer toutes les lignes d'un bloc avant de passer au bloc suivant, donc bloc après bloc, générerait des circuits de conversion de balayage également complexes.

L'estimateur de mouvement et en particulier les circuits de traitement ont généralement une structure différente selon le nombre et la taille des blocs traités ne permettant pas la standardisation ou l'intégration à faible coût du fait de cette spécificité.

La présente invention a pour but de résoudre les problèmes posés.

Elle a pour objet un dispositif d'estimation de mouvement d'une image vidéo par appariement de blocs comprenant un circuit de traitement par vecteur mouvement candidat pour calculer les erreurs entre les pixels mis en correspondance par ce vecteur pour chaque bloc de l'image. Les circuits de traitement cumulent les erreurs au niveau de chaque ligne d'un bloc pour fournir des sommes partielles, les circuits de traitement relatifs aux vecteurs mouvements candidats de même composante sont couplés entre eux pour former une chaîne, elle même rebouclée par l'intermédiaire d'une mémoire pour transférer les sommes partielles des erreurs calculées à la ligne vidéo courante pour le bloc précédent et correspondant à chacun de ces vecteurs candidats vers cette mémoire et les sommes partielles calculées à la ligne vidéo précédente et relatives au bloc suivant, de cette mémoire vers les entrées des circuits de traitement correspondants, ces transferts étant réalisés pendant le calcul de la somme partielle du bloc courant.

Grâce à ce dispositif, les circuits de mise en oeuvre de l'estimateur sont simplifiés, le temps de calcul et le coût de ce dernier réduits. Aucune conversion de balayage n'est nécessaire. Les circuits de mémoire sont en nombre limité permettant une simplification de l'architecture globale de l'estimateur de mouvement. Celle-ci est adaptée à différents types d'appariements, par exemple sur l'image précédente de type "one-sided block matching" ou interpolatif de type "two-sided block matching". Celle-ci est également adaptée à l'exploitation de blocs de taille variable et fournit un accès facile aux erreurs calculées des blocs pour le traitement en aval. L'exploitation de petites structures élémentaires répétitives couplées entre elles et à des circuits communs est particulièrement bien adaptée à une intégration à grande échelle, par exemple la réalisation de circuits VLSI, de l'Anglo-saxon Very Large Scale Integration.

Les caractéristiques et avantages de la présente invention ressortiront mieux de la description suivante donnée à titre d'exemple et en référence aux figures annexées, où :
- La figure 1 représente une architecture d'un estimateur de mouvement de type "one-sided block matching" selon l'art antérieur.
- La figure 2 représente une architecture d'un estimateur de mouvement de type "two-sided block matching" selon l'art antérieur.
- La figure 3 représente un circuit de traitement de l'estimateur de mouvement bouclé sur un registre à décalage.
- La figure 4 représente une autre version d'un circuit de traitement de l'estimateur de mouvement.
- La figure 5 représente un groupe de circuits de traitement.
- La figure 6 représente l'agencement des groupes de circuits de traitement de l'estimateur de mouvement.

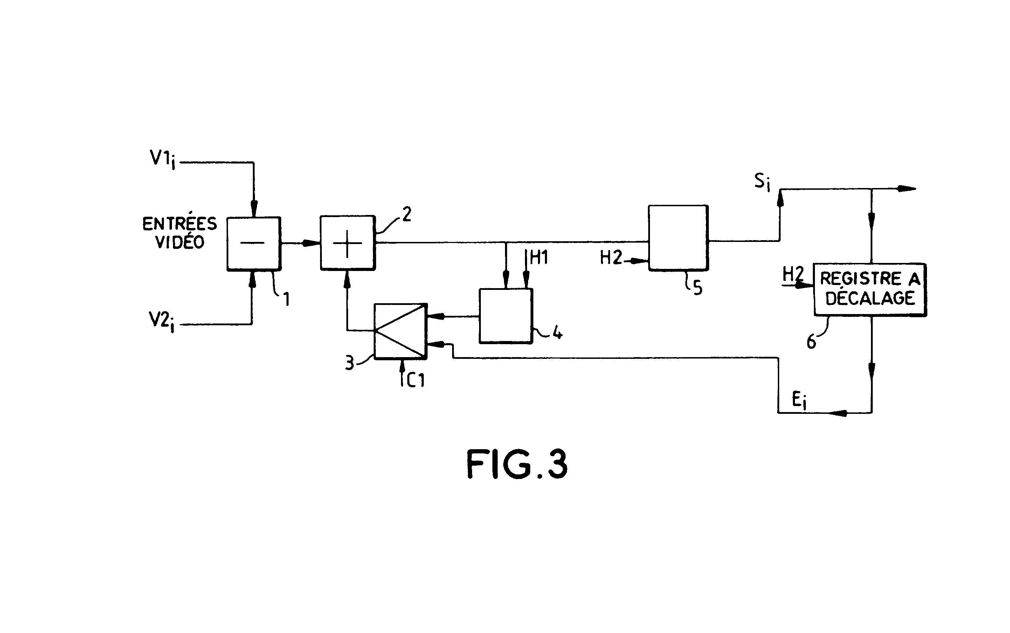

Une première architecture du circuit de traitement proprement dit est représentée à la figure 3.

Les informations présentes à l'entrée du circuit correspondent à un balayage télévision. L'image est décomposée de manière connue en blocs, une ligne de M blocs, dans une image, constituant une bande ou "stripe".

Un circuit de calcul de l'erreur absolue ou de l'erreur quadratique 1 reçoit sur une première entrée V1i, la luminance du pixel courant du bloc courant et sur la deuxième entrée V2i la luminance du pixel de l'image précédente décalé corrélativement au circuit de traitement i considéré. Ce décalage est en effet, comme on l'a vu sur la figure 1 et 2, fonction du circuit de traitement étudié, puisque lié aux circuits à retard qui lui sont associés et que doit "traverser" le pixel de l'image précédente ou bien le pixel de l'image précédente et le pixel de l'image suivante avant d'arriver au circuit de traitement. Ces valeurs numériques de luminance sont reçues à la fréquence d'échantillonnage de l'image ou fréquence pixel. La sortie du circuit de calcul est reliée à une première entrée d'un additionneur 2 dont la deuxième entrée provient d'un multiplexeur 3. La sortie de l'additionneur est transmise à un circuit à retard 4 ou registre à mémoire commandé par l'horloge d'échantillonnage pixel, horloge reçue sur l'entrée horloge H1, et dont le retard correspond en conséquence à la durée entre deux échantillons. Sa sortie est reliée à une première entrée du multiplexeur 3. Ainsi, lorsque la sortie de ce dernier est commutée sur cette entrée reliée au circuit à retard, par l'intermédiaire d'un signal de commande transmis sur une entrée de commande C1 du multiplexeur, l'additionneur 2 va ajouter l'erreur précédemment cumulée et mémorisée arrivant sur sa deuxième entrée à l'erreur courante arrivant sur sa première entrée. Il va ainsi cumuler, au rythme de l'horloge pixel, les erreurs calculées par le circuit de calcul 1 pour l'ensemble des échantillons (pixels) reçus et cela tant que le multiplexeur est ainsi positionné. La sortie de l'additionneur 2 est également reliée à l'entrée d'un deuxième registre à mémoire 5 du même type que le précédent mais ici commandé par une entrée horloge H2. La sortie de ce registre est la sortie appelée Si du circuit de traitement et est reliée à l'entrée d'un registre à décalage 6. La sortie de ce registre à décalage est reliée à la deuxième entrée du multiplexeur 3, également l'entrée appelée Ei du circuit de traitement. Les entrées et sorties Ei et Si sont celles du circuit de traitement proprement dit, le registre à décalage ne faisant pas partie de ce circuit.

La commutation C1 se fait au rythme de l'horloge bloc ligne dont la fréquence appelée par la suite fréquence bloc ligne est P fois plus faible que la fréquence pixel si P est le nombre de pixels sur une ligne d'un bloc. Lors du passage aux pixels du bloc suivant, le multiplexeur est commuté, pendant un coup d'horloge pixel, sur l'entrée Ei. Cette entrée Ei est égale à zéro pour la première ligne d'un bloc et à la somme partielle de ce bloc pour les autres lignes, somme partielle correspondant à la somme des erreurs cumulées sur chaque ligne de ce bloc jusqu'à la ligne courante. La valeur Ei est ajoutée, par l'intermédiaire de l'additionneur 2, à l'erreur calculée pour le premier pixel de la ligne traitée du bloc. La somme est enregistrée dans le registre 4 au coup d'horloge pixel suivant correspondant à l'apparition de l'échantillon suivant sur les entrées V1i et V2i et est transmise à l'entrée de l'additionneur 2, le multiplexeur 3 étant à nouveau commuté, lors de ce même coup d'horloge pixel, sur le sortie du registre à mémoire 4. Le cumul des erreurs se fait ainsi pour chacun des échantillons d'une ligne d'un bloc, le passage au bloc suivant déclenchant la commutation du multiplexeur sur Ei.

L'entrée H2 reçoit l'horloge bloc ligne et mémorise la somme partielle fournie par l'additionneur dans le registre 5 en fin de ligne d'un bloc. La sortie Si est enregistrée au coup d'horloge bloc ligne suivant dans le registre à décalage 6 constitué de M-1 cases. Ce registre emmagasine donc les erreurs partielles, à la fréquence bloc ligne. La somme partielle mémorisée par le registre 5 apparaît donc M coups d'horloge bloc ligne plus tard en sortie du registre à décalage 6 donc sur la deuxième entrée du multiplexeur 3. Ce registre joue le rôle, associé au circuit à retard 5, d'un circuit à retard d'une période ligne permettant de présenter à l'entrée de l'additionneur, lors du traitement d'une nouvelle ligne d'un bloc, la somme partielle correspondant aux lignes précédentes de ce bloc. La sortie Si est également transmise vers des mémoires tampon qui vont prélever les seules valeurs Si correspondant à l'erreur cumulée sur tout le bloc et ceci pour chacun des blocs de l'image.

Le circuit de traitement précédemment décrit est répété autant de fois qu'il y a de vecteurs mouvement candidats, la complexité du circuit global étant proportionnelle à la dimension de la fenêtre de recherche.

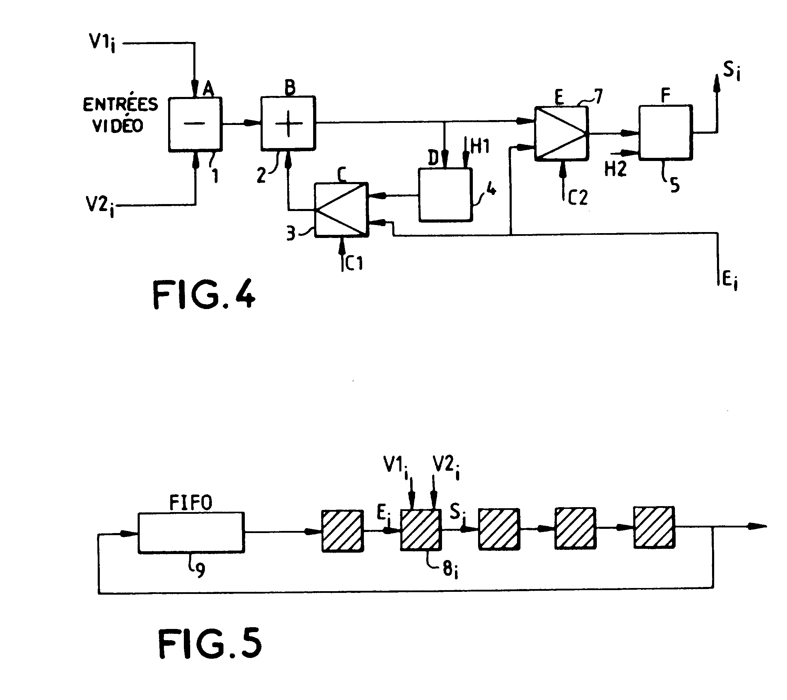

Une deuxième réalisation du dispositif est représentée à la figure 4 et 5 et permet d'obtenir une plus grande simplicité du circuit global.

La figure 4 représente le circuit de traitement proprement dit avec son entrée et sortie Ei et Si. Les éléments communs au circuit de la figure 3 ne sont pas décrits à nouveau et la même numérotation est reprise.

L'erreur cumulée, disponible en sortie de l'additionneur 2 est ici transmise au registre à décalage 5 par l'intermédiaire d'un multiplexeur 7 dont le rôle est explicité plus loin. La sortie de l'additionneur 2 est ainsi reliée à une première entrée d'un deuxième multiplexeur 7 dont la commutation est commandée par un signal transmis sur son entrée de commande C2 et la sortie de ce dernier est reliée à l'entrée du registre à décalage 5 commandé par l'entrée horloge H2. L'entrée Ei du circuit de traitement est reliée à la deuxième entrée du premier multiplexeur 3 mais également à la deuxième entrée du deuxième multiplexeur 7.

La figure 5 montre un circuit de calcul des erreurs cumulées par bloc pour l'ensemble des vecteurs mouvement candidats ayant une même composante horizontale. Cinq ensembles de ce type ou groupes de circuits de traitement sont donc nécessaires pour effectuer les traitements d'appariement conformément aux exemples donnés aux figures 1 et 2.

Le nombre N de circuits de traitement reliés en cascade correspond à la plus grande composante horizontale possible d'un vecteur mouvement (en nombre de pixels), également 5 dans notre exemple. Chacun de ces circuits 8i qui sont les circuits de traitement précédemment décrits reçoit les entrées vidéo V1i et V2i correspondant aux luminances. La sortie Si de chaque circuit est reliée à l'entrée E i+1 du circuit suivant, Ei et Si étant les entrées et sorties décrites à la figure 4. La sortie Si du dernier circuit 8i, appelée sortie du groupe de traitement est reliée à l'entrée d'une mémoire FIFO 9 et la sortie de cette mémoire est reliée à l'entrée du premier circuit 8 de la chaîne.

Plutôt que d'accumuler les sommes partielles dans des registres à décalage du type précédent pour chacun des circuits de traitement, celles-là, disponibles en sortie de ces circuits de traitement 8i après le traitement d'une ligne d'un bloc donné, vont être transférées dans une seule mémoire FIFO 9 pendant le temps de calcul de la somme partielle du bloc suivant. Cette mémoire permet de mémoriser temporairement les sommes partielles effectuées à chaque ligne de chaque bloc et donc pour l'ensemble des circuits de traitement 8i.

C'est le rôle du multiplexeur 7 de faire transiter ces sommes partielles mesurées vers une seule mémoire FIFO. Ainsi, la commutation du multiplexeur 7 se fait à la fréquence bloc ligne, comme pour le multiplexeur 3. Mais ici, l'entrée Ei est transmise en permanence, via le multiplexeur, vers le registre à mémoire 5 sauf pendant la période de l'horloge pixel correspondant au dernier pixel du bloc et pendant laquelle le multiplexeur est commuté sur la sortie de l'additionneur pour transmettre la somme partielle vers le registre à mémoire 5, ce dernier la mémorisant par l'intermédiaire de H2.

Lorsque le multiplexeur est commuté sur Ei, ces sommes partielles mémorisées dans chaque registre à mémoire 5 sont décalées d'un registre à mémoire d'un circuit de traitement au registre à mémoire du circuit de traitement suivant à la cadence du signal reçu sur H2, par exemple la fréquence pixel, et enregistrées dans la mémoire FIFO à cette même cadence.

Sont accumulées dans la mémoire FIFO N sommes partielles pour chacun des blocs traités, soit pour la stripe Nx(M-1) valeurs correspondant à M-1 blocs, les N dernières valeurs calculées étant mémorisées dans les registres à mémoire 5.

Ainsi, lors du traitement d'une ligne d'un nouveau bloc, les sommes partielles précédemment mémorisées pour ce nouveau bloc et pour chacun des circuits de traitement sont transférées vers les entrées respectives de ces circuits en même temps que les sommes partielles calculées pour le précédent bloc par chacun des circuits de traitement sont transférées vers la mémoire FIFO et ceci en utilisant la mise en série des registres à mémoire 5 lorsque le multiplexeur 7 est connecté sur l'entrée Ei. Ces registres jouent alors le rôle de circuits à décalage de N cases. Le transfert se fait à la fréquence horloge pixel reçue sur H2, pendant le calcul de la somme partielle d'une ligne d'un bloc. La mémoire FIFO peut être un simple registre à décalage possédant N(M-1) cases mémoire par exemple lorsque le rythme des entrées/sorties est le même.

Lors du traitement de la dernière ligne d'une stripe, les "sommes partielles" circulant dans le registre à mémoire 5 du dernier circuit de traitement de la cascade sont en fait les erreurs finales pour chacun des vecteurs mouvement d'un bloc (ou chacun des circuits de traitement de la chaîne) et cela pour chacun des blocs de la stripe. Ce sont ces valeurs disponibles en sortie du groupe de traitement qui sont prises en compte par les circuits en aval de l'estimateur de mouvement.

Si le nombre total de vecteurs mouvement candidats et donc de circuits de traitement est inférieur ou égal au nombre de pixels sur une ligne d'un bloc, alors toutes les sommes partielles peuvent être transférées à la fréquence horloge pixel pendant la durée de traitement d'un bloc. A la condition que l'instant de transfert soit décalé de N fois la période pixel d'un groupe à l'autre, les erreurs finales sortant du dernier registre à mémoire 5, pour un bloc donné, peuvent alors être transmises séquenciellement par exemple en multiplexant les sorties de chacun des groupes de traitement correspondant a une composante verticale d'un vecteur mouvement et ceci dans une période bloc ligne (correspondant à P périodes pixel).

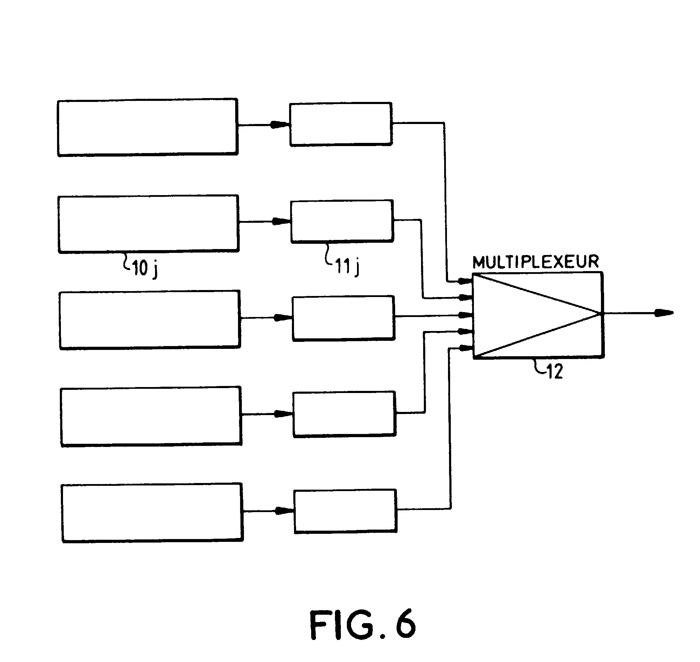

Si le nombre de pixels sur une ligne d'un bloc est inférieur au nombre total de circuits de traitement tout en étant supérieur au nombre de circuits de traitement d'un groupe de traitement, une mémoire tampon est utilisée en sortie de chaque groupe de traitement comme représenté à la figure 6. Il s'agit d'un circuit pour la collecte et la sérialisation des erreurs mesurées pour chaque bloc de l'image.

Le circuit 10j correspond au circuit précédemment décrit à la figure 5 aussi appelé groupe de traitement. La sortie de ce circuit 10j qui concerne un groupe j de vecteurs mouvement ayant même amplitude horizontale est donc la sortie du dernier circuit de traitement 8i dans la cascade.

Cette sortie est reliée à l'entrée d'un circuit mémoire tampon 11j qui va mémoriser les erreurs relatives à chacun des blocs de l'image pour les vecteurs mouvements correspondant au circuit 10j, l'horloge de transfert étant l'horloge pixel également utilisée pour le transfert de ces erreurs dans la mémoire FIFO. La capacité d'un buffer 11j est égale au nombre de circuits de traitement 8 du groupe de traitement relié à ce buffer multiplié par le nombre de blocs dans une stripe.

Si enfin le nombre de pixels sur une ligne d'un bloc est inférieur au nombre de circuits de traitement d'un groupe de traitement, la fréquence de transfert des sommes partielles dans la FIFO et des erreurs par bloc dans les mémoires tampon doit être supérieure à la fréquence pixel.

Une réalisation simple consistera cependant en ce que le nombre de circuits de traitement par groupe corresponde au nombre de pixels par ligne d'un bloc.

Dans notre exemple j est égal à 5, ce qui correspond à la fenêtre de ± 2 dans le sens vertical et le nombre de pixels sur une ligne d'un bloc est supposé au moins égal à 5 et inférieur à 25. Les erreurs calculées sont alors transmises simultanément pour chacun des groupes par l'intermédiaire des mémoires tampon 11j correspondantes. Ce transfert se fait lors du balayage de la dernière ligne de chaque stripe. Un multiplexeur 12 reçoit sur ses 5 entrées les sorties des mémoires tampon. Chaque sortie mémoire est successivement présentée en sortie du dispositif, par l'intermédiaire du multiplexeur, pour fournir l'erreur correspondant à un même bloc et ainsi de suite pour chacun des blocs, ceci à une cadence de lecture mémoire tampon qui est la fréquence pixel. En sortie du multiplexeur sont donc transmises en série toutes les erreurs correspondant aux vecteurs mouvement candidats pour un bloc d'image donné et ceci du premier au dernier bloc de l'image.

La transmission série des erreurs d'un bloc liées à chaque vecteur mouvement peut être effectuée pendant toute la durée d'une période stripe divisée par le nombre de blocs la constituant, c'est à dire la durée d'une période bloc ligne multipliée par le nombre de lignes d'un bloc, ce qui correspond à un nombre maximum de vecteurs mouvement égal au nombre de pixels d'un bloc, si la transmission se fait à la fréquence pixel. Le nombre de vecteurs mouvement candidats doit donc être au plus égal au nombre total de pixels dans un bloc pour une transmission à la fréquence d'échantillonnage.

Dans le cas contraire, la fréquence de lecture des registres tampon 11 doit être supérieure à la fréquence pixel.

Une réalisation particulière concerne des blocs de 16 pixels en horizontal et 8 en vertical. La fenêtre de recherche est de ± 2 pixels en vertical et de +7, -8 pixels en horizontal. Le nombre de vecteurs mouvement ou circuits de traitement est donc de 80 répartis en 5 groupes de traitement comprenant chacun 16 circuits de traitement. Les erreurs mesurées pour une stripe correspondent à 80 valeurs multipliées par le nombre de blocs dans la stripe. Ces valeurs sont transmises en série par le multiplexeur 12, à la fréquence pixel, pendant une période de 5 lignes de la stripe, laissant la durée des 3 autres lignes de cette stripe libre de transmission pendant que se termine le calcul des erreurs de la stripe courante.

La réalisation décrite n'est bien sûr en rien limitative. Il est ainsi tout aussi envisageable de coupler les circuits de traitement dans le sens vertical et non pas horizontal. On pourra choisir le type de couplage compatible de transferts à la fréquence pixel.

Il est également envisageable d'utiliser une seule mémoire 9 non pour chaque groupe de circuits de traitement mais pour tout l'ensemble des circuits de traitements de l'estimateur de mouvement. Les sorties des groupes de traitement peuvent alors être multiplexées sur l'entrée FIFO par exemple par l'intermédiaire de circuits trois états ou bien être transmises sur les entrées alors en nombre suffisant.

## Revendications

1. Dispositif d'estimation de mouvement d'une image vidéo par appariement de blocs, les données vidéo de l'image courante étant reçues selon un balayage ligne, comprenant un circuit de traitement (8i) pour chaque vecteur mouvement candidat, vecteur défini par une composante horizontale et verticale, pour calculer des erreurs entre les pixels mis en correspondance par ce vecteur pour chaque bloc de l'image, caractérisé en ce que les circuits de traitement (8i) cumulent les erreurs au niveau de chaque ligne d'un bloc pour fournir des sommes partielles, en ce que les circuits de traitement (8i) relatifs aux vecteurs mouvements candidats de même composante sont couplés entre eux pour former une chaîne, elle même rebouclée par l'intermédiaire d'une mémoire (9) pour transférer les sommes partielles des erreurs calculées à la ligne vidéo courante pour le bloc précédent et correspondant à chacun de ces vecteurs candidats vers cette mémoire et les sommes partielles calculées à la ligne vidéo précédente et relatives au bloc suivant, de cette mémoire vers les entrées des circuits de traitement correspondants, ces transferts étant réalisés pendant le calcul de la somme partielle du bloc courant.

2. Dispositif selon la revendication 1, caractérisé en ce que les couplages se font, en sortie de chaque circuit de traitement, par l'intermédiaire d'un registre (5) pour mémoriser les sommes partielles et d'un multiplexeur (7) pour commuter directement l'entrée du circuit de traitement à ce registre pour faire transiter les sommes partielles à travers les registres lors du transfert.

3. Dispositif selon la revendication 1 ou 2, caractérisé en ce que le transfert se fait à la fréquence d'échantillonnage de la vidéo.

4. Dispositif selon l'une des revendications précédentes, caractérisé en ce qu'il comporte un buffer (11j) en sortie de chaque chaîne de circuits de traitement pour mémoriser les erreurs par bloc présentées en sortie de chaque chaîne et un multiplexeur en sortie des buffers pour transmettre les erreurs en série bloc par bloc.

5. Dispositif selon l'une des revendications précédentes, caractérisé en ce que l'estimateur de mouvement est du type "one-sided block matching".

6. Dispositif selon l'une des revendications précédentes, caractérisé en ce que l'estimateur de mouvement est du type "two-sided block matching".
